# EUROPEAN PATENT APPLICATION

(11) **EP 4 227 079 A1**
(43) Date of publication of application: **16.08.2023**
(21) Application number: 23156811.4
(22) Date of filing: 15.02.2023
(51) Int. Cl.: B32B 7/12, B32B 27/08, B32B 27/30, B32B 27/32

(54) **HEAT SHRINKABLE FILM**

(30) Priority: 15.02.2022 EP 22156896
(71) Applicant: Flexopack S.A., 19400 Koropi (GR)
(72) Inventor: GKINOSATIS, Dimitris, 19400 Koropi (GR)
(74) Representative: Roukounas, Dimitrios

(57) **Abstract**

A heat shrinkable film comprising an outer layer comprising ethylene vinyl acetate, a sealing layer comprising ethylene alpha olefin copolymer and a layer comprising ethylene vinyl alcohol.

## Description

The present invention refers to a multilayer heat shrinkable film characterized by a combination of desirable properties, such as high shrinkage, good optical properties, excellent sealability, puncture resistance and recycling capacity. The invention further is directed to a method of producing said film. The invention is further directed to the use of said film or bags and pouches made therefrom for packaging goods as for example food products. The invention also refers to tubes made with the film.

Generally, the packaging of food items by means of a heat shrinkable bag comprises the following steps
1. Putting the food item inside the bag and removing the air (vacuumizing) with the help of a vacuum device.
2. Sealing of the open end of the bag.
3. Placing the vacuum pack in a heat shrinking media such as hot water under a temperature that ensures the shrink of the pack (eg 90°C).
4. The pack is ready and is characterized by appealing appearance and long shelf life because of the absence of oxygen.

These films need high shrink properties and good optics to ensure an excellent appearance and excellent sealability so that there is no entrance of oxygen to the pack as this would be detrimental for the shelf life of the food.

In some cases, where the food is stored in frozen conditions for example, there is the possibility to use a non gas barrier film. The other characteristics remain the same.

Packaging films with the above properties are well known in the art.

A problem that is often found in the art is that during the packaging process there is too much abuse of the packed bags by the production and transportation process. Therefore, it is common to have punctured bags that result in lowering the process yield and increasing the process scrap.

A further problem encountered in the art is the thermal deterioration of the seal during evacuation and sealing process due to inadequate melt strength of the material. This phenomenon is called "burnthrough" and is most often seen in poorly maintained sealing stations.

Optics such as high gloss and low haze are desirable features in the art.

Films that combine such properties are for example described in EP1084035. However, due to the presence of polyamide and polyester, such films are generally considered not easy to recycle. The case is the same for films comprising PVDC.

During the last few years, recyclability has become a very important aspect of all packaging films. In the area of heat shrinkable films, the use of highly succesful polymers like polyamide, polyester and polyvinylidene chloride copolymers is deemed to be generally not appropriate for recyclability. It is thus desirable to produce a heat shrinkable film that does not comprise these polymers.

### SUMMARY OF THE INVENTION

The present invention refers to a heat shrinkable film combining the following desirable quantities.
1. Heat shrinkage at 90°C at least 25% in at least one each of machine and transverse directions (or both) where the shrinkage is measured according to ASTM D 2732.
2. High puncture resistance
3. Very good optics
4. Very good "burnthrough" resistance

These desirable attributes are achieved with a film that
*comprises an outer layer comprising an ethylene vinyl acetate copolymer
*comprises a heat sealing layer comprising at least one ethylene alpha olefin copolymer with density of less than 0.915 g/cm³.
*comprises an oxygen barrier layer comprising EVOH..

Preferably the film is free of polyamide, polyester and PVDC.

### Definitions:

In this application the following definitions are used:
The term "film" refers to a flat or tubular flexible structure of thermoplastic material.
The term "heat shrinkable" refers to a film that shrinks at least 10% in at least one of the longitudinal and transverse directions when heated at 90°C for 4 seconds. The shrinkability is measured according to ASTM D2732.
The term "longitudinal direction" or "machine direction" herein abbreviated "MD" refers to a direction along the length of the film.
The term "transverse direction" herein abbreviated "TD" refers to the direction which is perpendicular to the machine direction.
The phrase "outer layer" refers to the film layer which comes in immediate contact with the outside environment (atmosphere).
The phrase "inner layer" refers to the film layer that comes in direct contact with the product packed. This is also called "sealing layer" as this layer must be hermetically sealed in order to protect the product from ingress of air.
The phrase "intermediate layer" refers to any layer of the film which is neither outer nor inner layer. A film may comprise more than one intermediate layers.
As used herein, the term "homopolymer" refers to a polymer resulting from polymerization of a single monomer.
As used herein, the term "copolymer" refers to a polymer resulting from polymerization of at least two different monomers.
As used herein, the term "polymer" includes both above types.
As used herein the term "polyethylene" identifies polymers consisting essentially of the ethylene repeating unit. The ones that have a density more than 0.940 g/cm³ are called high density polyethylene (HDPE), the ones that are have less than 0.940 g/cm³ are low density polyethylene (LDPE).
As used herein the phrase "ethylene alpha olefin copolymer" refers to polymers like linear low density polyethylene (LLDPE), medium density polyethylene (MDPE), very low density polyethylene (VLDPE), ultra low density polyethylene (ULDPE), metallocene catalysed polymers and polyethylene plastomers and elastomers. In these cases the alpha olefin can be propene, butene, hexene, octene etc as known in the art.
As used herein the term "homogeneous ethylene alpha olefin copolymers" refer to ethylene alpha olefin copolymers having a molecular weight distribution less than 2.7 as measured by gel permeation chromatography (GPC). Typical examples of these polymers are AFFINITY from DOW or Exact from Exxon.
As used herein the phrase "styrene polymers" refers to styrene homopolymer such as polystyrene and to styrene copolymers such as styrene-butadiene copolymers, styrene-butadiene-styrene copolymers, styrene-isoprene-styrene copolymers, styrene-ethylene-butadiene-styrene copolymers, ethylene-styrene copolymers and the like.
As used herein the phrase "ethylene methacrylate copolymers" refers to copolymers of ethylene and methacrylate monomer. The monomer content is less than 40%.
As used herein the phrase "ethylene vinyl acetate copolymer" refer to copolymers of ethylene and vinyl acetate. EVA is the abbreviation for ethylene vinyl acetate copolymers.
As used herein, the term EVOH refers to ethylene vinyl alcohol copolymers. The ethylene content is typically in the range of 25% to 50%.
As used herein the term PVDC refers to a vinylidene chloride copolymer wherein a major amount of the copolymer (more than 50% by weight) comprises vinylidene chloride and a minor amount of the copolymer comprises one or more monomers such as vinyl chloride and/or alkyl acrylates and methacrylates.
As used herein the term polyamide refers to homopolymers and copolymers.
As used herein the term "ionomer" refers to ethylene-acid copolymers which have been neutralized by metals such as sodium, zinc, lithium or others.
   The acid used is usually methacrylic or acrylic acid.
As used herein the term "polybutylene" refers to butene-1 homopolymers and copolymers. Useful copolymers comprise ethylene mer units . Ethylene content should be generally less than 50%.
As used herein the term "glycol modified polyester" encompasses polyesters such as PETG, PCTG, spiroglycol modified polyethylene terephthalate and the like.

All measurement methods mentioned herein are readily available for the skilled person. For example, they can be obtained from the American National Standards Institute at: www.webstore.ansi.org

All percentages regarding polymer content used are by weight percentages, unless stated otherwise.

### DETAILED DESCRIPTION OF THE INVENTION

According to a first aspect the present invention is directed to a biaxially oriented heat shrinkable film, comprising an outer layer which comprises an EVA copolymer, a sealing layer comprising an ethylene alpha olefin copolymer with density less than 0.915 g/cm³ and an oxygen barrier layer comprising EVOH.

The film of the invention exhibits a shrinkage of at least 25% measured according to ASTM D2732 in water at 90°C in at least one of the MD, TD directions.

### OUTER LAYER

According to a preferred embodiment of the invention, the EVA copolymer comprises from 6% to 28% by weight VA (vinyl acetate), more preferably from 9% to 25%, even more preferably from 12% to 18%.

According to a further preferred embodiment of the invention, the EVA copolymer has a melt flow index of 0.2 to 5 measured at 190°C and 2.16 kilogram weight, as described by ASTM D1238.

According to a another preferred embodiment, the outer layer comprises a further polymer selected from low density polyethylene, high density polyethylene, cyclic olefin copolymer, ethylene butene copolymer, ethylene hexene copolymer, ethylene octene copolymer and polypropylene. Preferably the further polymer is a plastomer ethylene alpha olefin copolymer with density from 0.880 g/cm³ to 0.920 g/cm³.

As the EVA of the outer layer of the invention are quite sticky, it is preferred to comprise from 0.1-10% by weight slip and or antiblock compound. The coefficient of friction of the outer layer is preferably less than 0.5 measured according to ASTM D1894(kinetic coefficient of friction-film to film configuration).

### INNER LAYER

In the film according to the present invention, the inner sealing layer comprises a ethylene alpha olefin copolymer with density of less than 0.915 g/cm³.

In a preferred embodiment the sealing layer comprises a homogeneous alpha olefin copolymer with a density less than 0.915 g/cm³.

In another embodiment of the invention the inner layer comprises a blend of two homogeneous ethylene alpha olefin copolymers which have both densities less than 0.915 g/cm³.

The inner layer may further comprise a polyolefin or a blend of different polyolefins. In a preferred embodiment of the structure, the sealing layer comprises at least one homogeneous polyolefin.

In a preferable embodiment of the invention, the inner layer comprises ethylene norbornene copolymer (cyclic olefin copolymer), such as Topas from Polyplatics or Apel from Mitsui.

### OXYGEN BARRIER LAYER

The multilayer film of the invention comprises an oxygen barrier layer comprising EVOH.

Preferably the oxygen barrier material is located in an intermediate layer of the film.

In general, EVOH with an ethylene content from 48% to 24% by mol is preferred, more preferably from 27% to 44% by mol.

### OTHER INTERMEDIATE LAYERS

Between the sealing layer and the oxygen barrier layer, a tie layer could be used. Preferred materials for this tie layer may be ethylene ester copolymers, such as ethylene vinyl acetate copolymers, ethylene methyl acrylate copolymers and other materials well known in the art. A preferred embodiment might include maleic anhydride modified ethylene ester copolymers or maleic anhydride modified LLDPE. Commercial products are for example BYNEL from Dupont and ADMER from Mitsui.

Between the outer and the barrier layer there may be another layer incorporating a tie layer. Preferred materials for this tie layer may be ethylene ester copolymers, such as ethylene vinyl acetate copolymers, ethylene methyl acrylate copolymers and other materials well known in the art. A preferred embodiment might include maleic anhydride modified ethylene ester copolymers or maleic anhydride modified LLDPE. Commercial trademarks are for example BYNEL from Dupont and ADMER from Mitsui.

A preferred construction of the multilayer film is as follows
Outer layer - intermediate layer - barrier layer - intermediate layer - inner layer

Other preferred construction are as follows.
Outer layer - intermediate layer 1 - intermediate layer 2- barrier layer- intermediate layer 3 - intermediate layer 4 - inner layer

Any of the layers described above may also include additives well known in the art, such as slip agents, antiblock, polymer processing aids, antistatic, antifog, acid scavengers, odour scavengers and the like. A person skilled in the art may select the right additives according to any particular needs.

The thickness of the film is preferably from 10 to 150 microns, more preferably from 20 to 120 microns. The thickness of the outer layer is preferably from 1 to 50 microns, more preferably from 3 to 25 microns. The thickness of the inner layer is preferably 5 to 100 microns, more preferably from 10 to 60 microns.

In order the material to have a high shrinkability at 90°C, it is needed to be biaxially oriented for example by using the double bubble process or the tenter frame process. Both processes are well known in the art. The double bubble process is especially preferred.

Preferably, the film or some layers of the film are crosslinked.

A preferable crosslinking method is irradiation by electron beam or UV radiation or gamma ray. Other methods are also known in the art. Irradiation with use of electron beam is preferred.

According to a further aspect, the present invention discloses a bag or pouch comprising a film according to the present invention.

In a further aspect, the invention is directed to the use of the films or the bag or pouch of the invention for packaging, such as for packaging food. For example, the food item is put inside the bag and the air is removed (vacuumizing) with the help of a vacuum device. Subsequently, the open end of the bag is sealed and the vacuum pack is placed in a heat shrinking media such as hot water under a temperature that ensures the shrink of the pack (e.g. 85-90°C). The pack then is ready and is characterized by appealing appearance and long shelf life because of the absence of oxygen.

The Examples disclose embodiments of the present invention:

### EXAMPLES

### Example 1

A 5 layer film is produced in a double bubble (the double bubble method is described in US 3,456,044) commercial line with the following recipe

Inner (sealing layer), 56% P1+ 40% P2+4% additives

| | |
|---|---|
| Adjacent layer | 100% T1 |
| Barrier layer | 100% EVOH 1 |
| Adjacent layer | 100% T1 |
| Outer layer | 95%E1+ 5% slip antiblock masterbatch |

The meanings of EVOH1, T1,P1,P2,E1 are shown in Table 1.

The thickness of the structure is 23/9/5/9/8 starting from the inner and going to the outer layer.

### Example 2

A 5 layer film is produced in a double bubble (the double bubble method is described in US 3,456,044) commercial line with the following recipe

The film of the example 2 was produced by crosslinking prior to the film orientation the outer and the adjacent layer.

| | |
|---|---|
| Inne r(sealing layer), | 56% P1+ 40% P2+4% additives |
| Adjacent layer | 100% T1 |
| Barrier layer | EVOH1 |
| Adjacent layer | 100% T1 |
| Outer layer | 95%E1+ 5% slip antiblock masterbatch |

### Example 3

A 5 layer film is produced in a double bubble (the double bubble method is described in US 3,456,044) commercial line with the following recipe

| | |
|---|---|
| Inner (sealing layer), | 56% P1+ 40% P2+4% additives |
| Adjacent layer | 100% T1 |
| Barrier layer | EVOH1 |
| Adjacent layer | 100% T1 |
| Outer layer | 60% E1+ 35% P1+ 5% slip antiblock masterbatch |

**TABLE 1**

| Type | Description | Manufacturer | Melt Index g/10 min | Density g/cm3 | Melting point ° C. |
|---|---|---|---|---|---|
| E1 | EVA GREENFLE X FC45 | Versalis | 0.3 | 0.935 | 93 |
| EVOH 1 | H171B | EVAL | 1 | 1.17 | 172C |
| P1 | AFFINITY PF1140 | DOW | 1.6 | 0.896 | 94C |
| P2 | TAFMER 4085 | MITSUI | 3.5 | 0.885 | Less than 70C |
| T1 | ADMER195 5 | MITSUI | | 0.89 | |

### Comparative test

The above examples are compared to the commercial product BRE. This film has barrier layer comprising PVDC and is well established in the market. It is the comparative film shown below, e.g. in table 2.

### Further processing of the samples

The samples were further processed as follows;
*Example 1 was irradiated only after orientation
*Example 2 was irradiated only before orientation
*Example 3 was irradiated before orientation similar to example 2

The level of irradiation of all the films was 6 mrads.

### Tests

1. Haze measurement. The haze measurement was done according to ASTM D 1003.
2. Gloss measurement. This was done according to BS 2782.
3. Shrinkage measurement done according to ASTM 2732 at 90°C.
4. Puncture resistant test.

Puncture resistance is measured using a MECMESIN instrument comprising a vertical stand VERSA TEST, a load cell AFG 100N, which is mounted on the stand, and a digital height gauge MITUTOYO SDV 60B. A cylindrical shaft ending to a conical indenter is attached to the load cell. The indenter has an angle of 60° and a tip of 0.5mm in diameter. The film is conditioned at 23°C and about 50%RH for at least 24 hours prior to the measurement. Square samples of 8.5cmx8.5cm are prepared and clamped on a 5cm diameter circular base. The indenter moves perpendicular to the film and force is measured as the indenter comes into contact with and ruptures the film. The speed of the indenter is set to 25mm/min. Maximum force needed to puncture the film is recorded. The puncture force of a material is determined by averaging the values obtained for at least 5 samples of the material tested.

**TABLE 2**

| | HAZE | GLOSS | SHRINKAGE(MD /TD) 90°C | PUNCTURE RESISTANCE IN UNSHRUNK FILM |
|---|---|---|---|---|
| Example 1 | 6 | 120 | 48/48 | 14 Newtons |
| Example 2 | 7.5 | 112 | 51/51 | 15 Newtons |
| Example 3 | 7.7 | 110 | 45/44 | 14 Newtons |
| Comparative example | 6 | 120 | 50/47 | 11 Newtons |

### BURN THROUGH TEST

The test was done on a vacuum heat seal VC999 machine.
Different sealing times were used and the heat abuse of the seal area was evaluated as per the following rate
5 no abuse
4 slight abuse
3 medium
2 a lot of abuse
1 totally burned

In sealing time 1 and 2 seconds the results were

| | SEAL TIME 1 SEC | SEAL TIME 2 SEC |
|---|---|---|
| EXAMPLE 1 | 4.4 | 3.5 |
| EXAMPLE 2 | 4.5 | 3.7 |
| EXAMPLE 3 | 4.3 | 3.4 |
| COMPAR. EXAMPLE | 3.1 | 2.5 |

It is a surprising effect that a low heat resistant polymer like EVA can withstand such conditions that simulate the real application conditions.

## Claims

1. A biaxially oriented heat shrinkable film comprising
an outer layer comprising ethylene vinyl acetate,
a sealing layer comprising an ethylene alpha olefin copolymer with density less than 0.915 g/cm³ and
an oxygen barrier layer comprising ethylene vinyl alcohol.

2. The biaxially oriented heat shrinkable film according to claim 1, wherein the film does not comprise polyamide, polyester and PVDC.

3. The biaxially oriented heat shrinkable film according to claim 1 or 2, wherein the film is of the construction Outer layer - intermediate layer - barrier layer - intermediate layer - inner layer

4. The biaxially oriented heat shrinkable film according to claim 1 or 2, wherein the film is of the construction Outer layer - intermediate layer 1 - intermediate layer 2- barrier layer- intermediate layer 3 - intermediate layer 4 - inner layer

5. The biaxially oriented heat shrinkable film according to any one of the preceding claims, wherein the ethylene content of the ethylene vinyl alcohol is from 27% to 44% by mol.

6. The biaxially oriented heat shrinkable film according to any one of the preceding claims, wherein the outer layer further comprises another polymer.

7. The biaxially oriented heat shrinkable film according to claim 6, wherein the polymer is ethylene alpha olefin copolymer having a density from 0.880 g/cm³ to 0.920 g/cm³.

8. The biaxially oriented film according to any one of the preceding claims, wherein all the layers of the film are crosslinked, or at least one layer of the film is crosslinked.

9. The biaxially oriented heat shrinkable film according to claim 8, wherein crosslinking is performed by irradiation.

10. The biaxially oriented heat shrinkable film according to claim 9, wherein the irradiation is done prior to orientation.

11. The biaxially oriented heat shrinkable film according to any one of the preceding claims, wherein the film exhibits a shrinkage of at least 25% in at least one of machine direction and transverse direction, measured in water at 90°C according to ASTM D2732.

12. The biaxially oriented heat shrinkable film according to any one of the preceding claims, wherein the outer layer further comprises from 0.1-10% w/w of a slip and/or antiblock compound.

13. The biaxially oriented heat shrinkable film according to any one of the preceding claims, wherein the sealing layer comprises a single polyolefin or a blend of different polyolefins.

14. Use of the film according to any one of the preceding claims in packaging, such as food packaging.
